# EUROPÄISCHE PATENTSCHRIFT

(11) **EP 2 539 179 B1**
(45) Veröffentlichungstag und Bekanntmachung des Hinweises auf die Patenterteilung: **09.11.2016**
(21) Anmeldenummer: 11720021.2
(22) Anmeldetag: 10.02.2011
(51) Int. Cl.: B63B 35/44, B66C 23/08, B66C 9/00, B66C 23/26, B66C 23/18, F03D 1/00

(54) **ONSHORE-PRODUKTIONSANLAGE FÜR OFFSHORE-WINDENERGIEANLAGEN UND VERFAHREN ZUM ERSTELLEN VON MINDESTENS TEILGEFERTIGTEN OFFSHORE-WINDENERGIEANLAGEN**
ONSHORE PRODUCTION FACILITY FOR OFFSHORE WIND ENERGY SYSTEMS AND METHOD FOR CREATING AT LEAST PARTIALLY FINISHED OFFSHORE WIND ENERGY SYSTEMS
INSTALLATION DE PRODUCTION SUR TERRE FERME D'INSTALLATIONS ÉOLIENNES EN MER ET PROCÉDÉ POUR CONSTRUIRE DES INSTALLATIONS ÉOLIENNES EN MER AU MOINS PRÉFABRIQUÉES

(30) Priorität: 22.02.2010 DE 102010002181
(43) Veröffentlichungstag der Anmeldung: 02.01.2013
(73) Patentinhaber: STRABAG Offshore Wind GmbH, 70567 Stuttgart (DE)
(72) Erfinder: WEBER, Klaus, 72336 Balingen (DE); GLADE, Joachim, 27476 Cuxhaven (DE)
(86) Internationale Anmeldenummer: PCT/DE2011/075020
(87) Internationale Veröffentlichungsnummer: WO 2011/100965

(56) Entgegenhaltungen:
- EP-A2- 1 101 935
- US-A1- 2004 262 926
- US-A1- 2009 217 852
- US-B1- 7 112 029
- KERR D: "SUPPORT STRUCTURES FOR AN OFFSHORE ARRAY OF VERTICAL AXIS WIND TURBINES -A DESIGN STUDY", WIND ENGINEERING, MULTI-SCIENCE PUBLISHING CO., BRENTWOOD, ESSEX, GB, Bd. 10, Nr. 1, 1. Januar 1986 (1986-01-01) , Seiten 47-61, XP001014352, ISSN: 0309-524X
- KERR D: "SUPPORT STRUCTURES FOR AN OFFSHORE ARRAY OF VERTICAL AXIS WIND TURBINES -A DESIGN STUDY", WIND ENGINEERING, MULTI-SCIENCE PUBLISHING CO., BRENTWOOD, ESSEX, GB, vol. 10, no. 1, 1 January 1986 (1986-01-01), pages 47-61, XP001014352, ISSN: 0309-524X

## Beschreibung

### Technisches Gebiet

Die Erfindung betrifft eine Onshore-Produktionsanlage für Offshore-Windenergieanlagen am Rand eines schiffbaren Gewässers oder im Hafen gemäß dem Oberbegriff des Anspruches 1. Außerdem betrifft die Erfindung ein Verfahren zum Herstellen von zumindest teilgefertigten Offshore-Windenergieanlagen gemäß dem Oberbegriff des Anspruches 3.

### Stand der Technik

Hinsichtlich der Umweltbelastung der Meeresfauna durch Lärmemission infolge von Rammarbeiten bei Pfahlgründungen und auch der Möglichkeiten zum Rückbau hat sich die Flachgründung von Offshore-Windenergieanlagen gegenüber anderen Gründungsarten als vorteilhaft erwiesen. In EP 1 691 073 A1 und der älteren Patentanmeldung DE 10 2009 055 175.1 ist ein flächiges Gründungselement beschrieben. Auch der Grundgedanke, die Offshore-Windenergieanlage komplett an Land zu fertigen und per Schiff an den planmäßigen Aufstellort zu verbringen, ist bereits in der ebenfalls älteren Patentanmeldung DE 10 2008 046 360.4 enthalten. Dort ist der Vorteil einer witterungsunabhängigen Montage unter gleichbleibenden Randbedingungen erwähnt. Neben diesem Vorteil bietet eine Produktionsstätte, die eine Montage in Fertigungsstraßen - die derer in Automobilwerken ähnelt - umfasst, den Vorteil einer gleichbleibend hohen Qualität des Endproduktes. Erreicht wird dies durch standardisierte Abläufe in werksmäßigem Umfeld. Zugleich kann der Kostenaufwand im Herstellprozess reduziert werden.

Aus der POWER Offshore Wind Mini-Conference, 11. September 2007: "The Offshore Wind Energy Market in Germany" von Jan Rispens, Managing Director - Wind Energy Agency Bremerhaven/Bremen (siehe dort Seiten 12 - 17) ist eine Onshore-Produktionsanlage für Offshore-Windenergieanlagen am Rand eines schiffbaren Gewässers bzw. Hafen mit einer Aufgliederung in einzelne Produktionsbereiche zur abschnittsweisen Vorfertigung der Windenergieanlagen bekannt. Die Produktionsanlage ist in mehrere Bereiche unterteilt (s. dort S. 17), unter anderem in einen Bereich zur Fundamentherstellung (S. 14 u. 17), eine Produktionsstation zur Herstellung des Mastes (S. 17 "Tower production"), eine Station zur Endmontage und eine Übergabestation am Gewässerrand (S. 17). Auch in Kerr D: "Support structures for an offshore array of vertical axis wind turbines - a design study" ist eine onshore Produktionsanlage für Offshore Windenergieanlagen offenbart. Hier ist eine Aufgliederung in einzelne Produktionsbereiche ähnlich einer Fabrik-Produktion angeregt. In US 7 112 029 ist gezeigt, dass onshore hergestellte Anlagen an ein Installationsschiff übergeben werden und zum Installationsort verbracht werden. Die Dokmente EP 1 321 670 und DE 10 308 239 zeigen weitere Beispiele der Produktion von Windkraftanlagen.

Allem vorgenannten Stand der Technik ist gemein, dass er nicht umfassend alle Aufgaben löst.

Im Hinblick auf die Bedeutung erneuerbarer Energien und die der Windenergie im Besonderen kann davon ausgegangen werden, dass die Anzahl der Offshore-Windenergieanlagen stetig zunimmt. Mit steigendem Bedarf an diesen Anlagen besteht auch die Notwendigkeit, bei schwierigen Wetterlagen und hohem Wellengang zu installieren.

### Aufgabe der Erfindung

Aufgabe der Erfindung ist es, eine Produktionsanlage vorzugeben, in der Offshore-Windenergieanlagen mit Gründung werksmäßig nach hohen Qualitätsanforderungen vollständig vor- oder teilgefertigt und so in Serienproduktion hergestellt werden können, wobei eine kostengünstige und vor allem flexible Herstellung ermöglicht werden soll. Weiter besteht die Aufgabe darin, ein entsprechendes Verfahren anzugeben.

### Darstellung der Erfindung

Die Aufgabe wird hinsichtlich der Produktionsanlage durch die im Anspruch 1 angegebenen Merkmale und hinsichtlich des Verfahrens durch die im Anspruch 3 angegebenen Merkmale gelöst. Zweckmäßige Ausgestaltungen sind in den Unteransprüchen 2 und 4 angegeben.
Hierzu sieht die Erfindung vor, in industriellen Produktionslinien gegebenenfalls parallel zueinander eine oder mehrere Flachgründungen herzustellen, diese mit Maststücken - vorzugsweise aus vorgespanntem Beton - zu ergänzen und optional die komplette Windenergieanlage mit einem Turm aus Stahl oder anderem geeigneten Material - beispielsweise glasfaserverstärktem Kunststoff -, Gondel und Rotorblättern zu montieren. Auch eine Abnahmeprüfung mit probeweiser Stromproduktion kann auf dem Areal realisiert werden.
Auf dem Produktionsgelände sind Lagerplätze für fertig- oder teilfertiggestellte Baueinheiten vorgesehen. Bedarfsabhängig kann so auf die Nachfrage reagiert werden und in mehreren Fertigungslinien auch auf Abruf produziert werden. Die industrielle Fertigung bietet den Vorteil, kostengünstig ein gleichbleibend hohes Qualitätsniveau im Endprodukt zu gewährleisten. Ein weiterer Vorteil der Fertigung onshore ist der, dass nahezu witterungsunabhängig gebaut werden kann und somit der Zeitraum zur Herstellung fast uneingeschränkt ist. Die Anlagen werden am Produktionsstandort gefertigt und mit einem Installationsschiff zum Aufstellort verbracht und dort installiert.

In einer vorteilhaften Ausbildung des Produktionsstandortes gibt es für jeden Bauabschnitt einen Produktionsbereich, der zum Teil in Werkshallen untergebracht ist. Nachgelagert sind Bereiche vorgesehen, die als Zwischenlager dienen können und somit einen Puffer zwischen den einzelnen Produktionseinheiten bilden. Ein Bauteil - wie beispielsweise das Fundament mit Schaft - kann aus diesem Zwischenlager jederzeit zur weiteren Bearbeitung - der Montage des oberen Maststückes - entnommen werden. Damit können die einzelnen Produktionsabschnitte besser aufeinander abgestimmt und Stillstandzeiten in der Produktion minimiert werden.

Zwischen den einzelnen Produktions- und Lagerstätten befinden sich befestigte, in ihrem Aufbau den großen Belastungen angepasste Fahrstraßen. Der Transport der extrem schweren Baueinheiten mit einem Eigengewicht von bis zu 8.000 t erfolgt auf Schwerlast-Modultransportern, wie sie bislang nur aus dem Kraftwerks- oder Anlagenbau bekannt sind. Diese sind selbstfahrend und miteinander koppelbar; durch einen hydrostatischen Fahrantrieb ist ein stufenloses und ruckfreies Fahren sichergestellt. Mit diesen Modultransportern ist - im Gegensatz zur Schienenbindung - ein völlig flexibles Verschieben beispielsweise auf Lagerflächen oder zur weiteren Fertigung der Baueinheiten möglich.
Um Aufnahme und Absetzen der Baueinheiten an den einzelnen Produktionsstationen umsetzen zu können, wird an den Produktionsstätten auf sogenannten Pallungen gearbeitet, die von den Modultransportern unterfahren werden können. Diese Pallungen sind entsprechend der erfolgenden Belastung gegründet.
Weiter gibt es zu den einzelnen Produktionsstationen Andienmöglichkeiten für Materialien wie zum Beispiel Beton, Bewehrung und Spannstahl. In einem Bereich des Geländes ist eine Einrichtung zur Bewehrungsvorfertigung und zur Reparatur von Schalungselementen vorgesehen; auch Lagerflächen für Baumaterialien und Massengut sind auf dem Gelände eingerichtet.

Die Herstellung des bevorzugt hohlkastenartigen Fundamentes erfolgt in Spannbetonweise, der Mastschaft wird vorzugsweise mit je einem Innen- und Außenschalungsring schrittweise nach dem Kletterschalungsprinzip hergestellt und ebenfalls vorgespannt. Alternativ ist auch die Herstellung im Gleitschalungsverfahren oder mit Betonfertigteilen realisierbar.

Zum Verbringen an den Aufstellort wird die fertiggestellte Windkraftanlage an die Verladepier transportiert. Diese ist in Fingerform ausgebildet und kann von einem geeigneten Installationsschiff in Katamaranbauweise angefahren werden. Das Anfahren erfolgt so, dass das Schiff die Pier überfährt, wobei auf beiden Seiten des 'Fingers' Schwimmkörper des Katamarans im Wasser liegen. Die montierte Windkraftanlage wird mittig vom Schiff aufgenommen, so dass kein zusätzlicher Hebevorgang oder eine exzentrische Lastaufnahme notwendig ist.

Die Fertigung des Fundamentkörpers erfolgt auf einem absenkbaren Schaltisch, der von den Modultransportern unterfahren werden kann. An den jeweiligen Arbeitsstationen werden die Baugruppen auf Pallungen abgestellt - hierbei handelt es sich um tiefgegründete Arbeitsplattformen, die in einer Ausführungsvariante mittels eingebauter Pressen höhenverstellbar sind. Die Schwerlast-Modultransporter sind höhenverstellbar, so dass alternativ auch auf festen, unverstellbaren Pallungen gearbeitet werden kann. Die Übernahme der Baugruppe von den Modultransportern auf die Pallung und umgekehrt erfolgt dann über eine Höhenänderung der Modultransporter.
Die Unterseite des Flachgründungskörpers liegt direkt auf den Pallungen oder Modultransportern auf, örtlich sind Unterfütterungen möglich. Lastverteilende Zwischenschichten sind im Allgemeinen nicht nötig, aber ebenfalls möglich. Prinzipiell kann eine temporäre Lagerung der teilgefertigten Baueinheiten auch auf den Schwerlast-Modultransportern erfolgen.

Ein Ausführungsbeispiel der erfindungsgemäßen Produktionsanlage und des Verfahrens zur Herstellung von Offshore-Windenergieanlagen ist nachstehend anhand der Zeichnungen erläutert. Dargestellt sind in den Zeichnungen:
- Fig. 1:: die schematische Darstellung einer Onshore-Produktionsanlage für Offshore-Windenergieanlagen
- Fig. 2:: die Produktion von Fundamenten als Flachgründungen
- Fig. 3:: die Fertigung eines aus Spannbeton bestehenden Maststückes auf einer Flachgründung
- Fig. 4:: die Montage des oberen Mastelementes
- Fig. 5:: die fertig montierte Windenergieanlage an der Fingerpier zur Übernahme durch das Installationsschiff

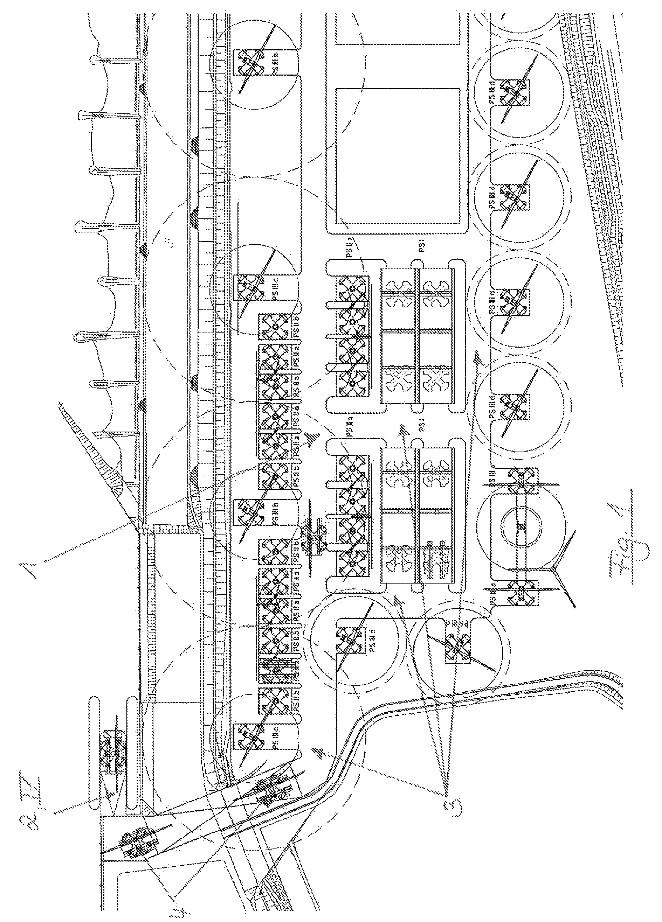

In Fig. 1 ist eine Produktionsanlage 1 für Offshore-Windenergieanlagen 11 gezeigt, wobei diese in Produktionsstationen (I, II, III, IV) unterteilt ist, in denen jeweils bestimmte Fertigungsschritte erfolgen. Zudem befinden sich auf dem Gelände Lagerplätze für Windenergieanlagen 11 in Zwischenbauzuständen: nach der Fertigstellung des Fundamentkörpers (Hohlkastenfundament) 12 mit Mastschaft 13 (IIb) und nach der Komplettmontage der Windenergieanlage 11 (IIId) sind Zwischenlagerplätze für die auftretenden Lasten ausgelegt. Zwischen den einzelnen Produktionsstätten verlaufen befestigte Flächen - sogenannte Fahrstraßen 3 -, die für den Transport der Baueinheiten mit Modultransportern 4 ausgelegt sind.
An der Produktionsstation I werden - bevorzugt in Werkshallen, die mit Brückenkränen 5 ausgestattet sind - die Fundamentkörper 12 auf absenkbaren Schaltischen 7 in mehreren Arbeitsstätten parallel zueinander gefertigt. Alle hierfür erforderlichen Arbeiten wie Schal- und Bewehrungsarbeiten, Vorspannen der Spannglieder mit anschließendem Verpressen und Ausschalarbeiten finden hier statt. Zur Weiterbearbeitung erfolgt ein Aufnehmen des fertigen Fundamentkörpers 12 auf Modultransportern 4, die diesen auf der Fahrstaße 3 zur Produktionsstation IIa verfahren. Alternativ kann eine Zwischenlagerung auf einer der dafür vorgesehenen Flächen erfolgen. Vorteilhaft ist auch in diesem Zusammenhang die äußerst flexible Mobilität der Schwerlast-Modultransporter 3.

An Produktionsstation IIa wird das bereits hergestellte Gründungselement, der Fundamentkörper 12, auf sogenannten Pallungen 8 abgestellt und auf dem hohlkastenartigen Fundamentkörper 12 ein Mastschaft 13 aus vorgespannten Beton erstellt. Die Betonage erfolgt unter Einsatz von Kränen 6 mittels Kletterschalung 9 in mehreren Takten 10 bis zum Erreichen der Endhöhe. Auch hier wird parallel an mehreren Baueinheiten gearbeitet. Der so gefertigte Unterbau - Fundamentkörper 12, Mastschaft 13 - der Windenergieanlage 11 wird erneut von Modultransportern 4 aufgenommen und zur Produktionsstation IIIa verfahren oder alternativ auf dem Reserveplatz IIb geparkt.
Nach dem Absetzen des aus Fundamentkörper 12 und Mastschaft 13 bestehenden Unterbaus auf den Pallungen 8 der Station IIIa wird dort der Stahlturm 14, die Stahlanbauteile 15 (wie Bootsanleger und andere Ausrüstung) und Gondel 16 mit Rotorblättern 17 installiert. Mit Modultransportern 4 erfolgt im Anschluss ein Transport zur Produktionsstation IIIb - dem Commissioning-Platz - zum Einbau und Test der Verkabelung der Anlage und weiter zur Produktionsstation IIIc zur Abnahme beziehungweise zum Langzeit-Inbetriebnahmetest. Auch hier besteht die Möglichkeit, die fertiggestellte Anlage 11 anschließend auf einem Reserveplatz IIId zu parken.
Auch für die Produktionsstationen IIIa - IIId sind jeweils mehrere Arbeitsstätten vorhanden, so dass eine parallele Fertigung von Windenergieanlagen 11 erfolgen kann - wie auch durch das flexible Transportsystem der Schwerlast-modultransporter 4 in Kombination mit dem Vorhalten von Lagerstätten IIb, IIId jederzeit eine Zwischenlagerung und damit Steuerung des Produktionsmengen-Zeit-Ergebnisses möglich ist.

Produktionsstation IV dient der Aufnahme der Windenergieanlage 11 durch ein geeignetes Installationsschiff 18. Die Baueinheit der Windenergieanlage 11 wird erneut von Modultransportern 4 aufgenommen und auf die Fingerpier 2 verfahren, wo bereits das Installationsschiff 18 in Form eines Katamaran-Schiffes wartet. Das Installationsschiff 18 überfährt die Fingerpier 2 und nimmt mittels Winden die komplette Windenergieanlage 11 direkt von den Modultransportern 4 auf. Von dort erfolgt das Verbringen an den Bestimmungsort, wo die Installation erfolgt.

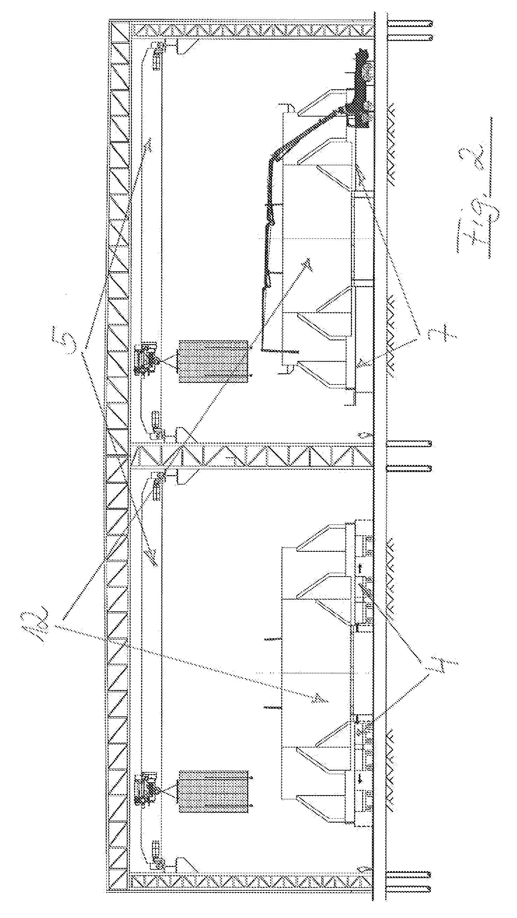

Fig. 2 zeigt einen Ausschnitt aus der Produktionsstation I, der Produktionsstätte zur Herstellung der Fundamentkörper 12 in Form von Flachgründungskörpern. In vorgefertigten Schalelementen mit verfahrbarem Schalboden - absenkbarem Schaltisch 7 - wird der Stahlbeton-Fundamentkörper 12 hergestellt. Nach dem Ausschalen erfolgt der Einbau von Stahlzuggliedern, die vorgespannt und anschließend verpresst werden. Alternativ kann der Einbau der Spannglieder direkt mit dem Bewehren erfolgen. Die Andienung erfolgt mit Brückenkränen 5 bevorzugt innerhalb einer Einhausung.

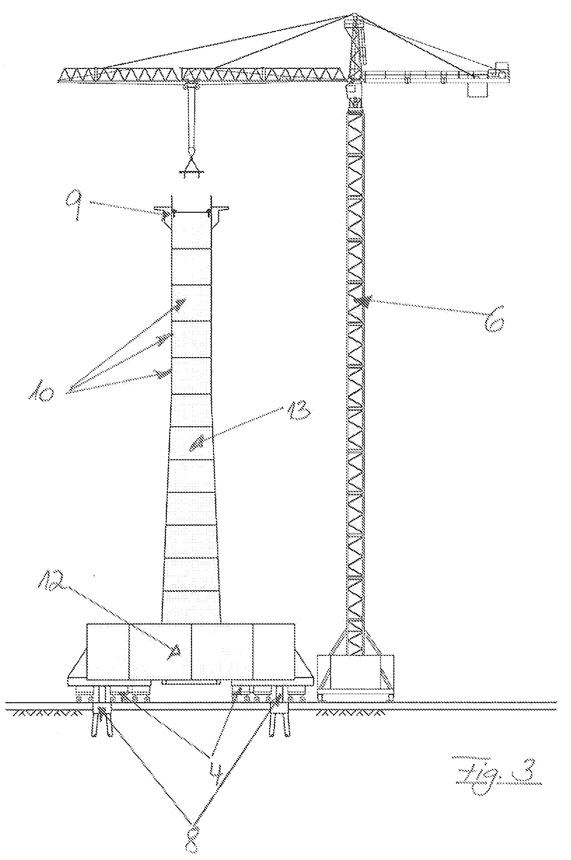

Fig. 3 zeigt die Fertigung eines aus Spannbeton bestehenden Mastschaftes 13 auf einem Flachgründungs-Fundamentkörper 12 an der Produktionsstation IIa. Nach dem Kletterschalungsprinzip wird der Mastschaft 13 taktweise errichtet: Zunächst wird die Innenschalung am Boden abgestellt, es folgen Bewehrungsarbeiten und das Verlegen der Hüllrohre für die Spannglieder. Mit Hilfe eines beispielsweise gleisgeführten Kranes 6 wird die Innenschalung samt Bewehrung eingehoben, nach dem anschließenden Einheben der Außenschalung wird das Schalungssegment geschlossen. Es folgt der Betoniervorgang und das Einbauen, Vorspannen und Verpressen der Spannglieder.

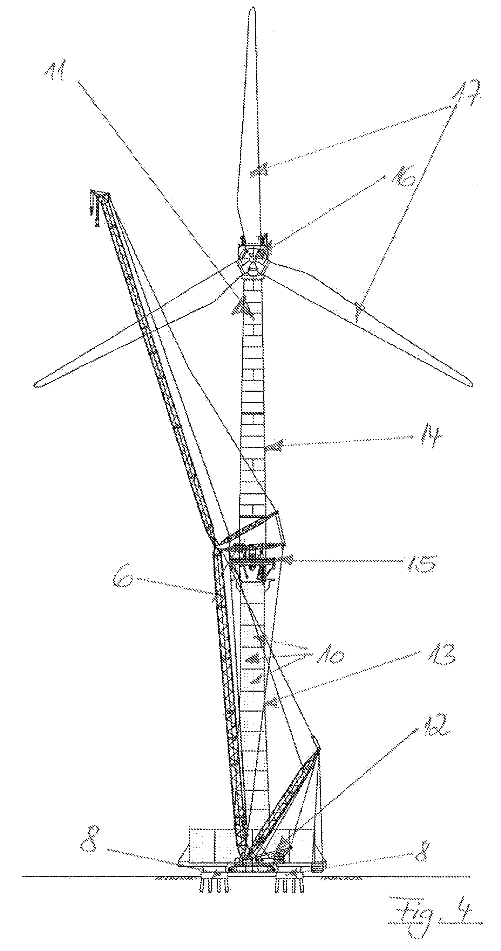

Produktionsstation III - in Fig. 4 dargestellt ist Station IIIa zum Zeitpunkt nach der Montage der Rotorblätter 17 - ist unterteilt in Stationen zur Turm-, Gondel- und Rotormontage IIIa, zum Einbau und Test der Verkabelung IIIb und zur Abnahmeprüfung IIIc, bei der probeweise über mehrere Stunden Strom erzeugt wird. Zur Montage ist jeweils ein Kran 6 vorgesehen. Eine Teilstation ist ein Reserveplatz IIId zur Lagerung der fertiggestellten Windenergieanlage 11.

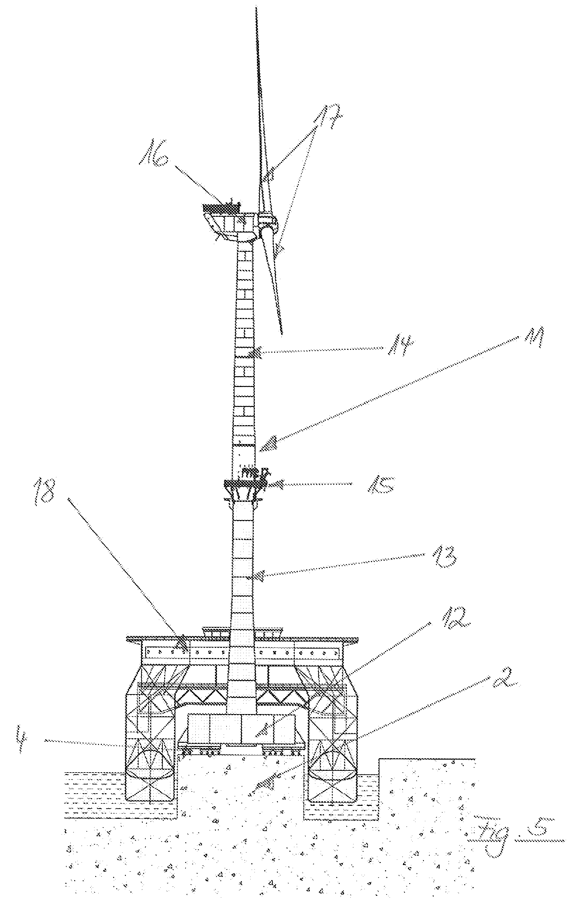

In Fig. 5 ist die fertiggestellte Windenergieanlage 11 auf der Fingerpier 2 zur Übernahme durch das Installationsschiff 18 dargestellt.

Wie vorstehend beschrieben, bietet die Onshore-Produktionsanlage die Möglichkeit, mit hohem Automatisierungsgrad gewaltige technische Bauwerke zu realisieren. Anders als im Bauwesen üblich, handelt es sich bei den errichteten Bauwerken nicht um Einzelstücke, die vorort unter spezifischen Randbedingungen gebaut werden, sondern um automatisierte - unter gleichbleibenden Randbedingungen gebaute - Serienprodukte. Diese der Industrie verwandte Serienfertigung ermöglicht das Einhalten hoher Qualitätsstandards in Verbindung mit witterungsunabhängigem Bauen. Gerade auf hoher See herrschen häufig Wetterbedingungen vor, die eine starke Einschränkung hinsichtlich der Montagemöglichkeit erzwingen. Die nahezu wetterunabhängige und flexible Fertigung in Zusammenhang mit einem hohen Automatisierungsgrad ermöglicht infolgedessen auch das Erstellen kostengünstiger Windenergieanlagen.
Ein besonderer Vorteil der Produktionsstätte ist die spezifizierte Ausgestaltung der einzelnen Produktionsstationen und das sehr flexible Transportsystem mit Schwerlast-Modultransportern.

### Bezugszeichenliste

- 1: Produktionsanlage
- 2: Fingerpier
- 3: Fahrstraßen
- 4: Schwerlast-Modultransporter
- 5: Brückenkran
- 6: Kran
- 7: absenkbarer Schaltisch
- 8: Pallung
- 9: Kletterschalung mit Arbeitspodest
- 10: Betonier-Takt
- 11: Windenergieanlage
- 12: Fundamentkörper
- 13: Mastschaft
- 14: (Stahl-)Turm
- 15: (Stahl-)Anbauteile
- 16: Gondel
- 17: Rotorblätter
- 18: Installationsschiff
- I: Produktionsstation
- II: Produktionsstation
- III: Produktionsstation
- IV: Produktionsstation
- IIb, IIId, ...: Zwischenlagerstätten

## Patentansprüche

1. Onshore-Produktionsanlage (1) für Offshare-Windenergleanlagen (11) am Rand eines schiffbaren Gewässers oder im Hafen mit einer Aufgliederung in einzelne Produktionsbereiche innerhalb der Produktionsanlage zur abschnittsweisen Vorfertigung der Windenergieanlagen (11) - unterteilt In einen Bereich als Produktionsstation (I) zur Fundamentherstellung, eine Produktionsstation (II) zur Herstellung eines Mastes, vorzugsweise Spannbetonmastes, eine Produktionsstation (III) zur Endmontage und einer Übergabestation als Produktionsstation (IV) am Gewässerrand,
**dadurch gekennzeichnet, dass** sie folgende Vorrichtungen aufweist:
- an den Stationen örtlich Pallungen (8) als lastabtragende Montageeinrichtungen,
- Schwerlast-Modultransporter (4) auf Fahrstraßen (3) ohne Schlenonbindung für den Transport zwischen den einzelnen Produktionsstationen (I, II, III, IV) und gegebenenfalls Zwischenlagerstätten (IIb, IIId), welche die Pallungen unterfahren können..

2. Produktionsanlage nach Anspruch 1,
**dadurch gekennzeichnet, dass** für die Übergabe einer fertiggestellten Windenergieanlage (11) an ein katamaranartiges Installationsschiff (18) - an der Übergabestation - eine speziell auf das Installationsschiff (18) abgestimmte, von diesem überfahrbare Fingerpier (2) vorhanden ist.

3. Verfahren zum Herstellen von mindestens teilgefertigten Offshore-Windenergleanlagen (11) In einer Onshore-Produktionsanlage (1) nach mindestens einem der Ansprüche 1 und 2,
**dadurch gekennzeichnet, dass** die Fertigung an den einzelnen Produktionsstationen (I - IV) auf Pallungen (8) erfolgt, die von den Schwerlast-Modultransportern (4) direkt unterfahren werden.

4. Verfahren nach Anspruch 3,
**dadurch gekennzeichnet, dass** die Übergabe der fertiggestellten Windenergleanlage (11) an ein Installationsschiff (18) in Katamaranbauweise an der Übergabestation als Produktionsstation (IV) an einer speziell auf das Installationsschiff (18) abgestimmten Fingerpier (2) erfolgt, Indem diese von dem Installationsschiff (18) überfahren wird und die Windenergleanlage (11) als Baueinheit mit zentrischer Lastaufnahme übernommen wird.

## Claims

1. Onshore production facility (1) for offshore wind turbines (11) at the edge of a navigable body of water or in the harbour, with a division into individual production regions within the production facility for the partial premanufacturing of the wind turbines (11) - divided into a region as a production station (I) for producing the foundation, a production station (II) for producing a mast, preferably a prestressed concrete mast, a production station (III) for the final assembly and a transfer station as a production station (IV) at the edge of the body of water, **characterized in that** said onshore production facility has the following apparatuses:
- bracing members (8) locally at the stations as load-dissipating assembly devices,
- heavy-load module transporters (4) on routes (3) without a rail mounting for transport between the individual production stations (I, II, III, IV) and optionally intermediate storage sites (IIb, IIId), beneath which the bracing members can pass.

2. Production facility according to Claim 1, **characterized in that**, for the transfer of a finished wind turbine (11) to a catamaran-like installation ship (18), there is - at the transfer station - a finger pier (2) which is specially coordinated with the installation ship (18) and over which the latter can pass.

3. Method for producing at least partially finished offshore wind turbines (11) in an onshore production facility (1) according to at least one of Claims 1 and 2, **characterized in that** the manufacturing takes place at the individual production stations (I - IV) on bracing members (8), beneath which the heavy-load module transporters (4) directly pass.

4. Method according to Claim 3, **characterized in that** the transfer of the finished wind turbine (11) to an installation ship (18) of catamaran-like design at the transfer station as the production station (IV) using a finger pier (2) specially coordinated with the installation ship (18) takes place by said finger pier being passed over by the installation ship (18) and the wind turbine (11) being taken on as a constructional unit with central load absorption.

## Revendications

1. Installation de production sur terre ferme (1) d'installations éoliennes en mer (11) sur la berge d'un cours d'eau navigable ou dans le port avec une subdivision en zones de production individuelles à l'intérieur de l'installation de production pour la préfabrication par parties des installations éoliennes (11) - subdivisée en une zone comme station de production (I) pour la fabrication de la fondation, une station de production (II) pour la fabrication d'un mât, de préférence un mât en béton précontraint, une station de production (III) pour le montage final et une station de transfert comme station de production (IV) sur la berge du cours d'eau, **caractérisée en ce qu'**elle présente les dispositifs suivants :
- localement aux stations des lignes de tins (8) comme dispositifs de montage supportant la charge,
- des transporteurs de modules lourds (4) sur des chaussées (3) sans voies ferrées pour le transport entre les stations de production individuelles (I, II, III, IV) et éventuellement des dépôts intermédiaires (IIb, IIId), qui peuvent circuler sous les lignes de tins.

2. Installation de production selon la revendication 1, **caractérisée en ce que**, pour le transfert d'une installation éolienne terminée (11) à un navire d'installation de type catamaran (18), il se trouve - à la station de transfert - un quai éperon (2) spécialement dimensionné pour le navire d'installation (18) et au-dessus duquel celui-ci peut s'engager.

3. Procédé de fabrication d'installations éoliennes en mer (11) au moins partiellement préfabriquées dans une installation de production sur terre ferme (1) selon au moins une des revendications 1 et 2, **caractérisé en ce que** l'on effectue la fabrication aux zones de production individuelles (I - IV) sur des lignes de tins (8), sous lesquelles les transporteurs de modules lourds (4) peuvent circuler directement.

4. Procédé selon la revendication 3, **caractérisé en ce que** l'on effectue le transfert de l'installation éolienne terminée (11) à un navire d'installation (18) de type catamaran à la station de transfert comme station de production (IV) sur un quai éperon (2) spécialement dimensionné pour le navire d'installation (18), par le fait que le navire d'installation (18) peut s'engager au-dessus de celui-ci et que l'installation éolienne (11) est transférée comme unité de construction avec une reprise de charge centrée.
